# EUROPÄISCHE PATENTANMELDUNG

(11) **EP 2 306 164 A1**
(43) Veröffentlichungstag der Anmeldung: **06.04.2011**
(21) Anmeldenummer: 10010497.5
(22) Anmeldetag: 24.09.2010
(51) Int. Cl.: G01G 21/22

(54) **Schaumkörper mit einer Kraftmessvorrichtung**

(30) Priorität: 30.09.2009 DE 102009043549
(71) Anmelder: Soehnle Professional GmbH & Co. KG, 71522 Backnang (DE)
(72) Erfinder: Gerster, Stephan, 53343 Wachtberg-Pech (DE)
(74) Vertreter: Hoffmann, Jürgen

(57) **Zusammenfassung**

Eine Baukomponente zur Verwendung als oder mit einer Kraftmessvorrichtung und/oder einer Waage ist im Hinblick auf eine individuelle Herstellbarkeit für Speziallösungen als Schaumkörper ausgebildet, der zumindest einen Aufnahmeraum aufweist, wobei in dem zumindest einen Aufnahmeraum zumindest ein Bauteil einer Kraftmessvorrichtung anordenbar ist und/oder angeordnet ist.

## Beschreibung

Die Erfindung betrifft ein Formteil insbesondere zum Einsatz als oder mit einer Kraftmessvorrichtung und/oder einer Waage.

Die aus dem Stand der Technik bekannten Waagen weisen in der Regel ein weitgehend kastenförmiges Gehäuse auf, in dem eine Wiegevorrichtung angeordnet ist. Oberhalb des Gehäuses ist zumeist eine Waagschale oder eine Wiegefläche angeordnet.

Es ist die Aufgabe der vorliegenden Erfindung, eine Baukomponente zur Verwendung als oder mit einer Kraftmessvorrichtung und/oder einer Waage anzugeben, die Individuell und auf einfache Weise für Speziallösungen herstellbar und einsetzbar ist.

Die Aufgabe wird durch einen Schaumkörper gelöst, der zumindest einen Aufnahmeraum aufweist, wobei in dem zumindest einen Aufnahmeraum zumindest ein Bauteil einer Kraftmessvorrichtung anordenbar ist und/oder angeordnet ist.

Die Erfindung hat den Vorteil, dass der Schaumkörper einfach in unterschiedlichsten Formen herstellbar und daher unter Berücksichtigung unterschiedlichster technischer und räumlicher Anforderungen produziert und eingesetzt werden kann.

Die Erfindung hat den weiteren Vorteil, dass die Bauteile der Kraftmessvorrichtung besonders gut integriert anordenbar sind und dass sie gegen äußere Einflüsse, insbesondere gegen mechanische Einflüsse, geschützt sind.

Beispielsweise kann der Aufnahmeraum als Ausnehmung oder als Durchbruch oder als Hohlraum ausgebildet sein.

Bei einer besonders vorteilhaften Ausführung des erfindungsgemäßen Schaumkörpers sind mehrere Aufnahmeräume vorgesehen, in denen jeweils ein Bauteil oder Bauteile einer Kraftmessvorrichtung angeordnet sind. Beispielsweise können in bodenseitigen Ausnehmungen Standfüße angeordnet sein, die Wägezellen beinhalten oder die als Wägezellen ausgebildet sind. Alternativ oder zusätzlich kann vorgesehen sein, dass beispielsweise in einem Hohlraum eine elektronische Auswertevorrichtung angeordnet ist, die Messsignale - beispielsweise von den Wägezellen oder anderen Kraftmesssensoren - empfängt und auswertet. Weiter kann vorgesehen sein, dass die Auswertevorrichtung Bediensignale von einer Bedienvorrichtung empfängt und/oder dass die Auswertevorrichtung eine Anzeigevorrichtung steuert. Die Bedienvorrichtung und die Auswertevorrichtung können erfindungsgemäß und vorteilhaft in weiteren Ausnehmungen des Schaumkörpers angeordnet sein.

Der Schaumkörper kann - angepasst an die vorgesehene Verwendung - als Hartschaumkörper ausgebildet sein.

Es ist auch möglich, den Schaumkörper als Weichschaumkörper auszubilden. Dies beispielsweise, wenn eine Außenseite des Schaumkörpers als Wiegefläche für Babys dient.

Vorteilhafter Weise sind weitgehend keine Grenzen dahingehend gesetzt, welche Bauteile einer Kraftmessvorrichtung in dem Schaumkörper anordenbar sind und/oder angeordnet sind. Beispielsweise kann das zumindest eine Bauteil der Kraftmessvorrichtung eine Wägezelle und/oder ein Kraftmesssensor sein. Es kann auch vorgesehen sein, dass das zumindest eine Bauteil der Kraftmessvorrichtung eine Anzeigevorrichtung und/oder eine Bedienvorrichtung, beispielsweise ein Tastenfeld oder einzelne Tasten, insbesondere Sensortasten, ist. Alternativ oder zusätzlich kann das zumindest eine Bauteil auch eine Auswertevorrichtung, insbesondere eine elektronische Auswertevorrichtung, sein.

Bei einer besonderen Ausführung ist vorgesehen, dass das zumindest eine Bauteil eine Ausgabevorrichtung zum Ausgeben von Signalen, insbesondere von Messsignalen, und/oder Daten ist. Hierbei kann es sich beispielsweise um einen - vollkommen verdeckt - in einem Hohlraum anordenbaren Sender handeln oder auch um eine in einer Ausnehmung oder einem Durchbruch angeordnete Steckerbuchse.

Bei einer besonders robusten Ausführungsform ist vorgesehen, dass das zumindest eine Bauteil eingeschäumt und/oder umschäumt ist. Insbesondere kann vorgesehen sein, dass das zumindest eine Bauteil in den Schaumkörper eingeschäumt und/oder vom Schaumkörper umschäumt Ist.

Alternativ ist es jedoch auch möglich, dass das zumindest eine Bauteil nach dem Herstellprozess des Schaumkörpers In den Aufnahmeraum eingesetzt ist.

Bei einer besonders gut zu reinigenden und besonders gut geschützten Ausführungsform weist der Schaumkörper eine Beschichtung und/oder einen Überzug auf. Dieser kann beispielsweise aus Leder oder Kunstleder oder aus Stoff oder aus Folie bestehen. Vorteilhafter Weise ist bei einer Ausführungsform eine abwaschbare Beschichtung und/oder ein abwaschbare Überzug vorgesehen.

Besonders einfach herstellbar und besonders stabil ist eine Ausführungsform, bei der der Überzug während des Herstellungsprozesses des Schaumkörpers mit an diesen angeschäumt ist. Hierdurch kann - ohne ein zusätzliches VerKleben - eine dauerhafte und feste Verbindung zwischen Überzug und Schaumkörper geschaffen werden.

Vorteilhafter Weise kann vorgesehen sein, dass der Überzug und/oder die Beschichtung unlösbar mit dem Schaumkörper verbunden ist. Alternativ kann für besondere Anwendungen jedoch auch vorgesehen sein, dass der Überzug und/oder die Beschichtung vom Schaumkörper lösbar und/oder austauschbar ist.

Wie bereits geschildert kann der erfindungsgemäße Schaumkörper vorteilhaft als Element einer Kraftmessvorrichtung oder einer Waage verwendet werden. Es ist erfindungsgemäß auch möglich, dass der Schaumkörper als Waage ausgebildet ist. Beispielswelse kann die Waage eine Babywaage als Babywaage ausgebildet sein.

Bei einer besonderen Ausführung ist vorgesehen, dass eine Außenfläche des Schaumkörpers und/oder eine Außenseite der Beschichtung oder des Überzuges eine Auflagefläche für das Wiegegut bildet.

Der erfindungsgemäße Schaumkörper kann vorteilhaft derart ausgebildet sein, dass er das Gehäuse einer Waage bildet.

Bei einer ganz besonders vorteilhaften Ausführung ist vorgesehen, dass die Waage eine Wiegeplattform aufweist, die wahlweise zusammen oder getrennt von dem Schaumkörper verwendbar ist. Insbesondere kann vorgesehen sein, dass die Wiegeplattform wenn sie mit dem Schaumkörper in Wirkverbindung steht und/oder in oder an dem Schaumkörper angeordnet ist, ihre Wiegefunktion bereitstellt, während der Schaumkörper eine Auflagefläche für das Wiegegut bereitstellt. Beispielsweise kann die Wiegeplattform außerhalb des Schaumkörpers als separate Waage und/oder als Teil einer separaten Waage, beispielsweise als Küchenwaage, fungieren, während sie zusammen mit dem Schaumkörper als Babywaage fungiert, die eine (durch den Schaumkörper) weiche Auflagefläche bereitstellt

In analoger Weise kann vorteilhaft vorgesehen sein, dass die Waage eine Bedienvorrichtung und/oder eine Anzeigevorrichtung aufweist, die wahlweise zusammen oder getrennt von dem Schaumkörper verwendbar ist.

Bei einer ganz besonders vorteilhaften Ausführung ist vorgesehen, dass die Waage eine Wiegeplattform und eine Bedien- und/oder Anzeigevorrichtung aufweist, wobei die Wlegeplattform und eine Bedien- und/oder Anzeigevorrichtung zusammen wahlweise innerhalb des Schaumkörpers anordenbar und verwendbar sind oder zusammen außerhalb von dem Schaumkörper als Waage verwendbar sind. Beispielsweise kann vorgesehen sein, dass die die Wegeplattform und die Bedien- und/oder Anzeigevorrichtung außerhalb des Schaumkörpers mechanisch miteinander zu einer separaten Waage verkoppelbar sind. Je nach Anwendungsfall können die Bedien- und/oder Anzeigevorrichtung - verkoppelt oder voneinander gelöst - mit und/oder in und/oder an dem Schaumkörper verwendet werden.

Bei einer ganz besonders vorteilhaften Ausführung ist vorgesehen, dass die Wiegeplattform und die Bedien- und/oder Anzeigevorrichtung drahtlos, beispielsweise per Funk und/oder W-Lan, miteinander kommunizieren und/oder Daten austauschen.

In vorteilhafter Weise kann auch vorgesehen sein, dass die Bedien- und/oder Anzeigevorrichtung eine Schnittstelle, insbesondere eine drahtlos arbeitende Schnittstelle, zu einem Rechner und/oder einem PC und/oder zum Anschluss an einen Netzwerk, insbesondere das Internet, aufweist.

Es kann - alternativ oder zusätzlich - aber auch vorgesehen sein, dass beim mechanischen Verkoppeln eine elektrische Steckverbindung hergestellt wird.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigt:
- Fig.1 1: eine Waage mit einem erfindungsgemäßen Schaumkörper.
- Fig. 2: eine weitere erfindungsgemäße Waage.

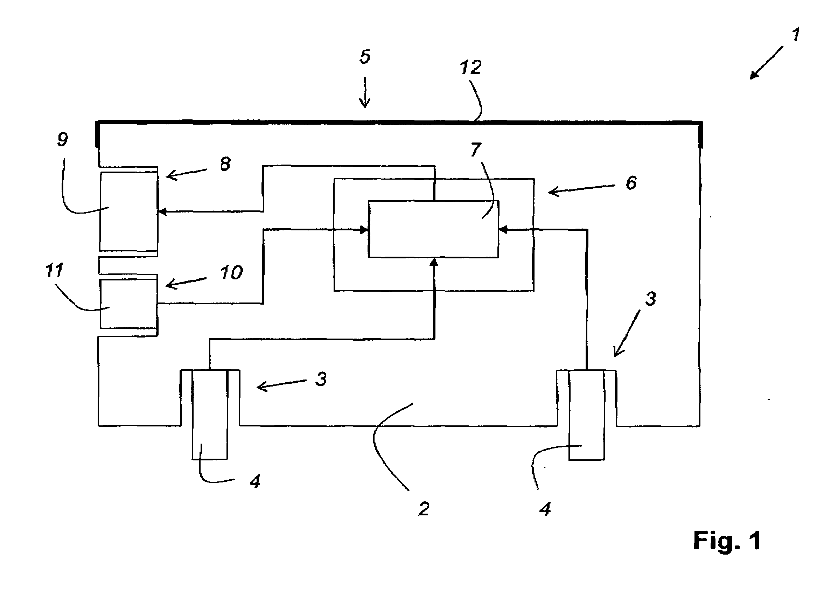

Fig. 1 zeigt eine Waage 1 mit einem erfindungsgemäßen Schaumkörper 2. Der Schaumkörper 2 weist bodenseitige Ausnehmungen 3 auf, in denen als Standfüße ausgebildete Wägezellen 4 angeordnet sind. Die Wägezellen 4 erzeugen, je nach Belastung der Wiegefläche 5, elektrische Messsignale, die über Zuleitungen an eine in einem Hohlraum 6 des Schaumkörpers 2 angeordnete elektronische Auswertevorrichtung 7 weitergeleitet werden. Die Auswertevorrichtung 7 steuert eine in einer weiteren Ausnehmung 8 angeordnete Anzeigevorrichtung 9. Die Waage weist in einer anderen Ausnehmung 10 eine Bedienvorrichtung 11 auf, die als Tastenfeld zur Eingabe von Funktionsbefehlen, wie "Tara" und "Ein/Aus" ausgebildet ist.

Außerdem ist der Schaumkörper 2 fest mit einem Überzug 12 verbunden, der beim Schäumungsprozess des Schaumkörpers 2 an diesen unlösbar angeschäumt wurde. Die Außenseite des Überzugs 12 bildet die Wiegefläche 5.

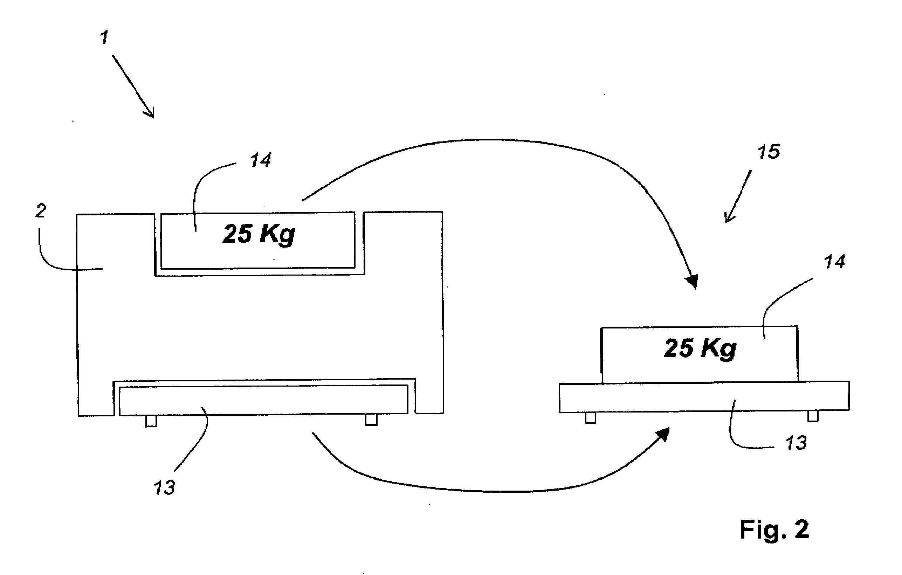

Figur 2 zeigt eine weitere erfindungsgemäße Waage 1 mit einem erfindungsgemäßen Schaumkörper 2.

Die Waage 1 weist eine Wiegeplattform 13 und eine Bedien- und Anzeigevorrichtung 14 auf, wobei die Wiegeplattform 13 und die Bedien- und Anzeigevorrichtung 14 innerhalb des Schaumkörpers 2 anordenbar und verwendbar sind, was in der linken Bildhälfte dargestellt ist. Ein Teil der Oberseite des Schaumkörpers 2 bildet eine Wiegefläche, was in der Figur nicht zu sehen ist.

Wahlweise können die Wiegeplattform 13 und die Bedien- und Anzeigevorrichtung 14 zusammen außerhalb von dem Schaumkörper 2 als separate Waage 15 verwendet werden. Die Wiegeplattform 13 und die Bedien- und Anzeigevorrichtung 14 sind außerhalb des Schaumkörpers mechanisch miteinander zu einer separaten Waage verkoppelbar, nämlich zusammensteckbar, was in der rechten Bildhälfte dargestellt ist.

Die Wiegeplattform 13 und die Bedien- und Anzeigevorrichtung 14 kommunizieren drahtlos.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste

- 1: Waage
- 2: Schaumkörper
- 3: bodenseitige Ausnehmungen
- 4: Wägezellen
- 5: Wiegefläche
- 6: Hohlraum
- 7: elektronische Auswertevorrichtung
- 8: weitere Ausnehmung
- 9: Anzeigevorrichtung
- 10: andere Ausnehmung
- 11: Bedienvorrichtung
- 12: Überzug
- 13: Wiegeplattform
- 14: Anzeige- und Bedienvorrichtung
- 15: Separate Waage

## Patentansprüche

1. Schaumkörper, der zumindest einen Aufnahmeraum, insbesondere eine Ausnehmung oder einen Durchbruch oder einen Hohlraum, aufweist, wobei in dem zumindest einen Aufnahmeraum zumindest ein Bauteil einer Kraftmessvorrichtung anordenbar ist und/oder angeordnet ist.

2. Schaumkörper nach Anspruch 1, **dadurch kennzeichnet, dass** mehrere Aufnahmeräume vorgesehen sind, in denen jeweils Bauteile einer Kraftmessvorrichtung angeordnet sind.

3. Schaumkörper nach einem der Ansprüche 1 oder 2, **dadurch gekennzeichnet, dass** das zumindest eine Bauteil der Kraftmessvorrichtung eine Wägezelle und/oder ein Kraftmesssensor und/oder eine Wiegeplattform und/oder eine Anzeigevorrichtung und/oder eine Bedienvorrichtung und/oder eine Auswertevorrichtung und/oder eine Ausgabevorrichtung zum Ausgeben elektronischer Signale, Insbesondere Messsignale, ist.

4. Schaumkörper nach eine der Ansprüche 1 bis 3, **dadurch gekennzeichnet, dass** das zumindest eine Bauteil eingeschäumt und/oder umschäumt ist und/oder dass das zumindest eine Bauteil in den Schaumkörper eingeschäumt und/oder vom Schaumkörper umschäumt ist.

5. Schaumkörper nach einem der Ansprüche 1 bis 4, **dadurch gekennzeichnet, dass** das zumindest eine Bauteil nach dem. Herstellprozess des Schaumkörpers in den Aufnahmeraum eingesetzt ist.

6. Schaumkörper nach einem der Ansprüche 1 bis 5, **dadurch gekennzeichnet, dass** der Schaumkörper eine Beschichtung und/oder einen Überzug aufweist und/oder dass der Schaumkörper einen Überzug aufweist, der aus Leder oder Kunstleder oder aus Stoff oder aus Folie besteht und/oder dass der Schaumkörper eine abwaschbare Beschichtung und/oder einen abwaschbaren Überzug aufweist.

7. Schaumkörper nach Anspruch 6, **dadurch gekennzeichnet, dass** der Überzug während des Herstellungsprozesses des Schaumkörpers mit an diesen angeschäumt ist und/oder dass

8. Schaumkörper nach einem der Ansprüche 1 bis 7, **dadurch gekennzeichnet, dass** der Schaumkörper als Waage ausgebildet ist und/oder eine Waage beinhaltet.

9. Waage, insbesondere Babywaage, mit einem Schaumkörper nach einem der Ansprüche 1 bis 8.

10. Waage nach Anspruch 9, **dadurch gekennzeichnet, dass** eine Außenfläche des Schaumkörpers und/oder eine Außenseite der Beschichtung oder des Überzuges eine Auflagefläche für das Wiegegut bildet.

11. Waage nach einem der Ansprüche 9 oder 10, **dadurch gekennzeichnet, dass** der Schaumkörper das Gehäuse der Waage bildet.

12. Waage nach einem der Ansprüche 9 bis 11, **dadurch gekennzeichnet, dass** die Waage eine Wiegeplattform aufweist, die wahlweise zusammen oder getrennt von dem Schaumkörper verwendbar ist.

13. Waage nach einem der Ansprüche 9 bis 12, **dadurch gekennzeichnet, dass** die Waage eine Bedienvorrichtung und/oder eine Anzeigevorrichtung aufweist, die wahlweise zusammen oder getrennt von dem Schaumkörper verwendbar ist.

14. die Waage eine Wiegeplattform und eine Bedien- und/oder Anzeigevorrichtung aufweist, wobei die Wiegeplattform und eine Bedien-und/oder Anzeigevorrichtung zusammen wahlweise innerhalb des Schaumkörpers anordenbar und verwendbar sind oder zusammen außerhalb von dem Schaumkörper als Waage verwendbar sind.

15. Waage nach einem der Ansprüche 9 bis 14, **dadurch gekennzeichnet, dass** die Wiegeplattform und die Bedien- und/oder Anzeigevorrichtung drahtlos, beispielsweise per Funk und/oder W-LAN, miteinander kommunizieren und/oder Daten austauschen und/oder dass die Bedien- und/oder Anzeigevorrichtung eine Schnittstelle, insbesondere eine drahtlos arbeitende Schnittstelle, zu einem Rechner und/oder einem PC und/oder zum Anschluss an einen Netzwerk, insbesondere das Internet, aufweist.
